# EUROPÄISCHE PATENTSCHRIFT

(11) **EP 2 284 425 B1**
(45) Veröffentlichungstag und Bekanntmachung des Hinweises auf die Patenterteilung: **23.08.2017**
(21) Anmeldenummer: 09015636.5
(22) Anmeldetag: 17.12.2009
(51) Int. Cl.: F16J 15/12, H01M 2/14, H01M 6/12, H01M 8/02

(54) **Dichtungsrahmenanordnung für Zellen in einer Batterie mit einem thermisch aktiven Ausgleichselement**
Sealing frame system for use in a battery
Arrangement avec cadre d'étanchéité destiné à l'utilisation dans une batterie

(30) Priorität: 06.07.2009 EP 09008802
(43) Veröffentlichungstag der Anmeldung: 16.02.2011
(73) Patentinhaber: Carl Freudenberg KG, 69469 Weinheim (DE)
(72) Erfinder: Kritzer, Peter, 67147 Forst (DE)

(56) Entgegenhaltungen:
- DE-A1- 1 475 582
- DE-A1-102007 004 567
- JP-A- 9 055 217
- US-A- 5 262 249

## Beschreibung

### Technisches Gebiet

Die Erfindung betrifft einen Dichtungsrahmen zur Verwendung in einer Batterie gemäß dem Oberbegriff des Patentanspruchs 1.

### Stand der Technik

Die JP 9 055217 A zeigt einen Dichtungsrahmen für eine Brennstoffzelle, in dessen Eckbereichen Öffnungen für Kühlwasser ausgebildet sind. Die US 5 262 249 A offenbart eine Separatorplatte für eine Brennstoffzelle. Die DE 1 475 582 A1 offenbart eine Hochdruckdichtungseinrichtung mit einer Heizwicklung. Die DE 10 2007 004 567 A1 zeigt" Coffee-Bag-Zellen", welche zwischen Gehäuseteilen mit Durchbrüchen für ein Kühlmedium aufgenommen sind.

Größere Batterien sind aus einzelnen Zellen ausgebaut. Üblicherweise enthält eine Batterie für Hybrid- bzw. Elektro-Fahrzeuge oder industrielle Anwendungen zwischen zwanzig und mehreren hundert einzelnen Zellen. Dabei können die einzelnen Zellen als Rundzellen, als prismatische Zellen oder sogenannte Coffee-Bag-Zellen ausgestaltet sein. Coffee-Bag-Zellen umfassen eine flexible, aus Folie aufgebaute Hülle, in der elektrischen Komponenten einer Zelle angeordnet sind.

Zur Realisierung einer optimalen Raumausnutzung in einer Batterie werden vor allem Coffee-Bag-Zellen verwendet. Diese zeichnen sich zudem durch ein geringes Gewicht bei hoher Kapazität aus. Coffee-Bag-Zellen sind über die thermisch leitfähigen Folien gut kühlbar. Des Weiteren sind Zellen dieser Bauart leicht skalierbar, da alle Komponenten der Zelle inklusive des Folien-Gehäuses in der Produktion leicht in der Größe variiert werden können.

Aufgrund hoher gespeicherter Energiemengen stellen größere Batterien stets ein Sicherheitsrisiko beim Auftreten von Fehlfunktionen dar. Dabei sind Lithium-Batterien als besonders kritisch anzusehen, da diese eine hohe Energiedichte, einen brennbaren Elektrolyten und dünne Separatoren aufweisen. Schließlich erzeugen Lithium-Batterien hohe Zellspannungen, so dass die in der Zelle angeordneten Komponenten hohen elektrochemischen Belastungen ausgesetzt sind. Dies ist besonders relevant bei Auto- und Industriebatterien, für die Lebensdauem von mindestens 8-10 Jahren angesetzt sind.

Die zuvor genannten Coffee-Bag-Zellen lassen sich platzsparend montieren. So können große Energiemengen pro Volumeneinheit in einer Batterie gespeichert werden. Hiermit sind allerdings wesentliche konstruktionsbedingte Nachteile verbunden. Durch die flexible Hülle verändert sich die Dimension von Coffee-Bag-Zellen, wenn diese geladen oder entladen werden. Dies ist auch mit einer Volumenausdehnung verbunden. Die Volumenausdehnung führt zu typischen Dickenänderungen einer einzelnen Zelle von etwa 5 % zwischen geladenem und ungeladenem Zustand.

Bei einem Zusammenbau eines sogenannten "Stacks", der aus vielen einzelnen, in Reihe geschalteten Zellen besteht, muss daher berücksichtigt werden, dass die einzelnen Zellen ein veränderliches Volumen zeigen. Insbesondere muss darauf geachtet werden, dass die Zellen im geladenen Zustand, bei welchem sie ihre größte Dicke annehmen, nahezu keine oder nur minimale Pressung auf die Flächen benachbarter Zellen ausüben. Dabei ist grundsätzlich auch zu berücksichtigen, dass die Dicke der flexiblen Zellen auch aufgrund der Fertigungstoleranzen nicht einheitlich ist, sondern Schwankungen unterworfen ist.

Des Weiteren besteht ein Bedarf nach einer Anordnung, durch welche Stöße oder Vibrationen abgefedert und/oder gedämpft werden, so dass das Innere der Batterie sowie Kontakte keinen Schaden nehmen. Des Weiteren müssen Anschlüsse der Leistungs- und Überwachungselektronik möglichst frei von mechanischen Belastungen mit der Batterie verbunden werden. Ein Loslösen schon einer der vielen hundert Kontakte der Leistungselektronik führt bei einer Reihenschaltung zum Ausfall der Batterie. Bei Ausfall eines Kontaktes der Überwachungselektronik kann die dann nicht mehr überwachte Zelle allmählich in einen kritischen Zustand gelangen, was mittetfristig zu einer Schädigung oder Ausfall der gesamten Batterie führen kann.

Die Kanten der zuvor genannten Coffee-Bag-Zellen weisen eine Siegelnaht auf. Diese Siegelnaht verbindet zwei Folien einer Zelle, welche dadurch in dem dadurch gebildeteten Hohlraum weitere Bauteile einschließen. Diese Folien sind dazu auf der Innenseite mit einem elektrisch isolierenden, haftvermittelnden Siegel-Thermoplasten beschichtet. Dieser Siegel-Thermoplast kann aus einem funktionalisierten Polyolefin gebildet sein. Diese Siegelnaht stellt eine mechanische Schwachstelle einer Coffee-Bag-Zelle dar.

Des Weiteren kann der Luftdruck in der Umgebung der Zellen schwanken. Wenn das Gehäuse einer Batterie hermetisch dicht abgeschlossen ist, kann es zu temperaturbedingten Druckschwankungen von typischerweise 0,2 bar kommen. Diese Druckschwankungen belasten die Siegelnähte zusätzlich.

Die Siegelnaht stellt aber auch eine Sollbruchstelle dar, die bei einem Störfall der Batterie dem Elektrolyt erlauben soll, auszublasen. Hierdurch soll ein Platzen der Zelle vermieden werden. Wenn der austretende brennbare Elektrolyt in Kontakt mit Elektroden tritt, kann er sich entzünden und zu Bränden oder Explosionen führen. Die maximal zulässigen Überdrücke im Inneren einer Coffee-Bag-Zelle liegen meist weit unterhalb von 0,1 MPa, um ein Öffnen der Siegelnaht zu verhindern. Besonders kritisch ist bei Coffee-Bag-Zellen die Durchführung der strornableitenden Elektroden anzusehen. Diese weisen meist eine Dicke von etwa 0,1 bis 0,3 mm auf. In diesem Bereich ist auch eine mögliche Leckage besonders kritisch, da sich austretender Elektrolyt an den Elektroden augenblicklich entzünden kann. Die Siegelnaht wird generell als Schwachstelle großer Zellen angesehen, da sie über Jahre hinweg ständigen, durch das Zyklisieren bedingten, Belastungen ausgesetzt ist.

Schließlich werden für die Kühlung großer Batterien derzeit vorzugsweise wasserbasierte Kühlmedien oder, bei Verwendung von Klimaanlagen, fluorierte Kohlenwasserstoffe oder Kohlendioxid eingesetzt. Ein direkter Kontakt der meisten Kühlmedien mit dem Inneren der Zellen kann zu einer heftigen chemischen Reaktionen führen. Bei wasserbasierten Kühlmedien wird zum Beispiel Wasserstoff freigesetzt, der leicht entzündlich ist und zu Explosionen führen kann. Aus diesem Grund wird in der Technik in der Regel eine Kontaktkühlung angewandt, wobei der Wärmefluss zwischen Zelle und Kühlkreislauf über thermisch leitfähige Komponenten hergestellt wird und das Kühlmedium so nicht in direktem Kontakt mit den Zellen stehen kann.

### Darstellung der Erfindung

Der Erfindung liegt daher die Aufgabe zu Grunde, eine Batterie derart auszugestalten und weiterzubilden, dass diese im Normalbetrieb eine optimale Betriebstemperatur und eine zuverlässige Dichtheit aufweist, bei Störfällen dem Elektrolyten aber erlaubt, problemlos und gerichtet zu entweichen.

Die vorliegende Erfindung löst die zuvor genannte Aufgabe durch die Merkmale des Patentanspruchs 1.

Erfindungsgemäß ist erkannt worden, dass elastisch komprimierbare Dichtflächen eine Sollbruchstelle wie eine Siegelnaht dicht anliegend umgeben und übergreifen können. Durch einen derartigen Dichtungsrahmen sind die Zellen innerhalb einer Batterie einerseits mechanisch fixiert und können andererseits ihr Volumen im Sollbereich der Vorder- und Rückseite geringfügig ändern, ohne das es zu belastenden Spannungen kommt. Die elastisch komprimierbaren Dichtflächen gleichen eine geringfügige Volumenänderung der Zellen problemlos aus, so dass keine mechanischen Beanspruchungen auf die elektrischen Anschlüsse übertragen werden. Des Weiteren können elastisch komprimierbare Dichtflächen Vibrationen dämpfen und abfedern. Die Schwachstelle einer Zelle ist zusätzlich abgedichtet, da auf diese ein elastischer Anpressdruck wirkt. Hierdurch wird ein Austreten von Elektrolyten von innen nach außen stark unterdrückt. Des Weiteren werden von außen anstehende Kühlmedien, insbesondere Wasser, oder aus der Umgebung anstehende Feuchtigkeit vom Inneren der Batterie ferngehalten. Weiter ist erkannt worden, dass in einer elastisch komprimierbaren Dichtfläche problemlos eine Sollausblasstelle im Dichtungsrahmen angebracht werden kann, welche im Störfall dem Elektrolyten einen Austritt von innen nach außen erlaubt. Der Elektrolyt wird hierdurch elektrodenfern abgeblasen und kann sich dadurch nicht an den Elektroden entzünden. Schließlich ist erkannt worden, dass thermisch aktive oder passive Kühlmittel die Zellen vor Überhitzung durch eine Kühlfunktion schützen können. Dabei ist auch erkannt worden, dass kalte Zellen durch aktive oder passive Heizmittel erwärmt werden können, um diese auf eine geeignete Betriebstemperatur zu bringen.

In der Öffnung ist ein poröses Element angeordnet. Das poröse Element kann vorteilhaft der Volumenausdehung der Zellen folgen und in jedem Ausdehnungszustand einen thermischen Kontakt zwischen sich und den Zellen herstellen.

Folglich ist die eingangs genannte Aufgabe gelöst.

Die Kühlmittel könnten als Kühlkanäle ausgestaltet sein. Durch Kanäle können Flüssigkeiten zur Kühlung geführt werden. Die Kanäle könnten als Rohre ausgestaltet sein, die orthogonal zu den Dichtflächen und/ oder parallel zu den Dichtflächen verlaufen. Rohre sind mechanisch besonders stabil.

Vor diesem Hintergrund könnten die Kühlmittel als Kühlschlangen ausgestaltet sein. Kühlschlangen können in beliebige Formen verbracht werden und sogar die Ecken des Dichtungsrahmens umlaufen, bzw. sich über Ecken des Dichtungsrahmens erstrecken. Vorzugsweise sind die Kühlschlangen im Dichtungsrahmen integriert.

Die Heizmittel könnten als Heizdrähte ausgestaltet sein. Hierdurch kann sehr schnell Wärme erzeugt werden, um ein nachteiliges Auskühlen einer Batterie auf Temperaturen unterhalb von 0°C zu verhindern.

Das poröse Element könnte als Vlies oder Vliesstoff ausgestaltet sein oder Vliese und/ oder Vliesstoffe aufweisen. Ein Vlies oder Vliesstoff kann im Hinblick auf seine Porosität problemlos eingestellt werden und zeigt eine hohe Elastizität und Flexibilität. Insbesondere ist denkbar, mehrere Lagen eines Vlieses oder Vliesstoffes einzusetzen, um phasenändernde Materialien sandwichartig zwischen den Lagen aufzunehmen. Das poröse Element könnte als Schaumstoff ausgestaltet sein.

Das poröse Element könnte thermisch leitfähig ausgestaltet sein. Hierdurch kann von den Zellen Wärme abgeführt werden bzw. ein verbesserter Wärmeübertrag auf die Zelloberfläche stattfinden.

Vor diesem Hintergrund könnte das poröse Element durch eine Beschichtung thermisch leitfähig ausgerüstet sein. Eine Beschichtung kann eine großflächige Bedeckung des Elements herstellen. Hierdurch wird eine relativ große thermische Kontaktfläche geschaffen.

Vor diesem Hintergrund könnte die Beschichtung Metall, Ruß oder Keramik aufweisen. Diese Materialien sind kostengünstig und weisen eine hohe thermische Leitfähigkeit auf.

Das poröse Element könnte thermisch leitfähige Fasern aufweisen. Hierbei ist denkbar, carbonisierte Fasern zu verwenden, da diese eine hohe thermische Leitfähigkeit aufweisen und sich problemlos in einem Vlies verteilen lassen.

Das poröse Element könnte mit mindestens einer Metallfolie versehen sein. Dabei ist denkbar, dass Metallfolien einseitig oder beidseitig auf dem porösen Element angeordnet sind. Metallfolien bewirken eine hohe thermische Leitfähigkeit.

Das poröse Element könnte mit dem Dichtungsrahmen verklebt sein. Klebstoff lässt sich leicht verarbeiten.

Das poröse Element könnte durch Vulkanisation mit dem Dichtungsrahmen verbunden sein. Eine Vulkanisation bewirkt eine besonders feste Verbindung des porösen Elements mit dem Dichtungsrahmen.

Das poröse Element könnte in den Dichtungsrahmen eingeklemmt sein. Hierdurch kann das poröse Element rasch festgelegt und montiert werden.

Das poröse Element könnte in den Dichtungsrahmen eingelegt sein. Bei dieser konkreten Ausgestaltung werden die Ränder des porösen Elements vom Dichtungsrahmen umgriffen.

Das poröse Element könnte auf den Dichtungsrahmen aufgeschweisst sein. Durch diese konkrete Ausgestaltung wird das poröse Element dauerhaft mit dem Dichtungsrahmen verbunden und kann nur unter Zerstörung abgelöst werden.

Das poröse Element könnte phasenändemde Materialien enthalten, welche innerhalb eines ersten Temperaturbereichs einen Phasenübergang von einer festen Phase in eine flüssige Phase ausführen. Phasenändernde Materialien, nämlich sogenannte "Phase Change Materials" können eine Temperatur-Pufferung bewirken. Diese Materialien bedürfen keines zusätzlichen Sensors oder Messgeräts, um ihren Phasenzustand zu ändern, sondern reagieren materialspezifisch. Der Phasenübergang sollte dabei im optimalen Arbeitszustand der Batterie stattfinden, nämlich im Bereich 10°C bis 35 °C. Hierdurch ist gewährleistet, dass die Batterie im Betrieb diesen optimalen Zustand nicht verlässt.

Alternativ könnte ein phasenändemdes Material zum Einsatz kommen, welches bei höheren Temperaturen, nämlich im Bereich 30 bis 50 °C, seinen Phasenzustand ändert. Dies hat den Vorteil, dass eine Überhitzung der Batterie abgepuffert werden kann.

Alternativ könnte ein phasenändemdes Material zum Einsatz kommen, welches bei niedrigerenTemperaturen, nämlich im Bereich 0°C bis 15 °C, seinen Phasenzustand ändert. Dies hat den Vorteil, dass eine schädliche Abkühlung der Batterie verzögert werden kann.

Vor diesem Hintergrund ist denkbar, nur ein phasenänderndes Material (PCM) einzusetzen. Hierdurch kann eine Batterie im optimalen Zustand gehalten oder eine schädliche Überhitzung verhindert werden. Des Weiteren kann eine schädliche Abkühlung vermieden werden. Sofern zwei phasenändemde Materialien eingesetzt werden, kann sicher gestellt werden, dass eine Batterie nicht zu heiss und nicht zu kalt wird.

Das poröse Element könnte erste phasenändemde Materialien enthalten, welche innerhalb eines ersten Temperaturbereichs einen Phasenübergang von einer festen Phase in eine flüssige Phase ausführen, wobei das poröse Element zweite phasenändemde Materialien enthält, welche innerhalb eines zweiten Temperaturbereichs einen Phasenübergang von einer festen Phase in eine flüssige Phase ausführen. Phasenändemde Materialien, nämlich sogenannte "Phase Change Materials" können eine Temperatur-Pufferung bewirken. Diese Materialien bedürfen keines zusätzlichen Sensors oder Messgeräts, um ihren Phasenzustand zu ändern, sondern reagieren materialspezifisch. Durch diese konkrete Ausgestaltung kann das erste phasenändemde Material bei einer relativ tiefen Temperatur puffern und kann das zweite phasenändemde Material bei einer relativ hohen Temperatur puffern. Die Pufferung bei tiefen Temperaturen verhindert weitgehend eine schädliche starke Abkühlung. Die Pufferung bei hohen Temperaturen verbessert die Sicherheit, indem lokale Temperaturspitzen gepuffert werden.

Das poröse Element könnte phasenändemde Materialien enthalten, welche innerhalb eines Temperaturbereichs von 0° C bis 50° C einen Phasenübergang von einer festen Phase in eine flüssige Phase ausführen. Besonders vorteilhaft sind phasenändemde Materialien, welche einen Temperaturbereich von 10° C bis 40° C puffern.

Die phasenändemden Materialien könnten aus organischen Stoffen oder ausschließlich aus organischen Stoffen bestehen. Diese phasenändemden Materialien sind leicht und wirken nicht korrosiv.

Die phasenändemden Materialien könnten aus anorganischen Stoffen oder ausschließlich aus anorganischen Stoffen bestehen. Diese phasenändernden Materialien sind nicht brennbar und zeigen eine verbesserte thermische Leitfähigkeit.

In das poröse Element könnten zusätzliche Heizmittel integriert sein. Das poröse Element könnte Heizelemente enthalten. Diese könnten als Heizdrähte ausgeführt sein. Weiterhin wäre denkbar, dass eine mit Heizdrähten ausgestattete Folie auf das poröse Element aufgebracht ist. Diese Anordnung erlaubt eine aktive Heizung und daher nochmalige Entgegenwirkung der schädlichen Auskühlung der Batterie.

Die phasenändernden Materialien könnten gekapselt sein. Durch diese konkrete Ausgestaltung wird ein Verlust des phasenändemden Materials verhindert. Zudem wird dadurch einer möglichen Verschmutzung der Zellen bzw. der Batterie entgegen gewirkt.

Im Sinne einer einfachen Fertigung kann der Grundkörper aus einem elastisch komprimierbaren Material gefertigt sein. Vor diesem Hintergrund ist konkret denkbar, dass der Grundkörper einstückig aus einem elastischen Material wie Silicon, Silikonkautschuk, SBR oder EPDM gefertigt ist. Da die Dichtung meist keinem direkten Medienkontakt ausgesetzt ist, sind auch andere Elastomere wie NBR denkbar. Die Verwendung von Silikon erlaubt eine zusätzliche Überlappung der Dichtung über die Elektroden. Bei Verwendung von kohlenstoffbasiertern Kautschuk kann in diesem Fall nicht immer ausgeschlossen werden, dass die hohen Spannungen in den Elektroden-Ableitern zu einer Carbonisierung der Elastomer-Oberfläche und damit zu einem Verlust der Isolierwirkung führen. Die Überlappung erlaubt es, die Elektroden mechanisch zu fixieren und unterstützt die Stabilität deren Kontaktierung.

Die erste Dichtfläche und/oder die zweite Dichtfläche können als elastisch komprimierbare Schicht, als elastomeres Einlegeteil, als elastomeres Profil oder als Dichtspur, insbesondere als umlaufende oder teilweise umlaufende Dichtung, ausgebildet sein, die auf einem nicht-elastischen Tragkörper aufgebracht ist. Hierdurch kann ein sehr stabiler Dichtungsrahmen gefertigt werden, der dennoch an den kritischen Stellen, nämlich den Dichtflächen, elastisch komprimierbar ausgestaltet ist. Vor diesem Hintergrund ist konkret denkbar, dass der nicht-elastische Tragkörper sandwichartig zwischen zwei elastisch komprimierbaren Schichten eingeschlossen ist. Denkbar ist auch eine einseitige Aufbringung einer elastisch komprimierbaren Schicht auf den nicht-elastischen Tragkörper. Der nicht-elastische Tragkörper könnte aus einem thermoplastischen Kunststoff, einem Duroplasten oder einem Metall gefertigt sein. Die Vorteile eines thermoplastischen Kunststoffs sind sein geringes Gewicht und die geringen Kosten. Des Weiteren ist ein Kunststoff elektrisch nicht leitfähig. Metalle sind gut thermisch leitend und können daher zur Kühlung verwendet werden. Hierbei sollte das Metall besonders im Bereich der Elektroden-Ableitbleche vollständig von den elastisch komprimierbaren Schichten gekapselt aufgenommen sein. Durch Verwendung von thermisch leitfähigen Kunststoffen, beispielsweise einem Thermoplast enthaltend Kohlenstofffasern, kann die thermische Leitfähigkeit der Kunststoffe und damit deren Wärmeübertragung wesentlich verbessert werden.

Alternative Werkstoffe sind geschlossen-porige Schäume oder Verbundmaterialien, welche bei ausreichender mechanischer Stabilität gegenüber "Vollmaterialien" den Vorteil einer geringeren Dichte aufweisen und dadurch ein geringeres Gesamtgewicht der Batterie ermöglichen.

Schließlich ist denkbar, dass der Grundkörper als ein Zwei-Komponententeil spritzgusstechnisch gefertigt ist. Hierdurch ist eine schnelle Fertigung erzielbar. Die Dichtung könnte durch Vulkanisation, Aufspritzen, Einlegen oder Verkleben auf den Träger aufgebracht werden. Der Dichtungsrahmen könnte einen Tragkörper aus Aluminium aufweisen, auf den eine Dichtschnur aus Silikon-Kautschuk aufgebracht ist.

Vor diesem Hintergrund ist denkbar, den Dichtungsrahmen thermisch leitfähig auszugestalten. Der Dichtungsrahmen könnte aus Polyamid 6 gefertigt sein, welches mit Kohlenstofffasern gefüllt ist. Auf den Dichtungsrahmen könnte eine Dichtung aus Silikon-Kautschuk aufgebracht sein. Auf den Dichtungsrahmen aus Polyamid 6, der mit Kohlenstofffasern gefüllt ist, könnte eine umlaufende Dichtung aus EPDM aufgebracht sein, wobei das EPDM zur Verbesserung der thermischen Leitfähigkeit Ruß als Füllstoff enthält. Der Dichtungsrahmen könnte aus Elastomer Vollmaterial, nämlich EPDM bestehen, welches zur Verbesserung der thermischen Leitfähigkeit Ruß als Füllstoff enthält.

In der ersten Dichtfläche und/oder der zweiten Dichtfläche kann eine Vertiefung ausgebildet sein. Die Siegelnaht einer Coffee-Bag-Zelle kann durch die Vertiefung in Kontakt mit der Atmosphäre stehen. Vor diesem Hintergrund ist denkbar, dass in einer Dichtfläche oder in beiden Dichtflächen eine Vertiefung ausgebildet ist. Sofern zwei Dichtungsrahmen aneinanderliegen, ergänzen sich die Vertiefungen zu einer vergrößerten Ausnehmung, durch welche die Siegelnaht einen Kontakt mit der Atmosphäre erhalten kann. Dabei kann die Aussparung im Querschnitt bogenförmig, halbkreisförmig oder rechteckig ausgebildet sein. Die bogenförmige bzw. halbkreisförmige Ausgestaltung erlaubt eine Anlage an der Siegelnaht ohne Anpressung. Hierdurch wird eine Sollausblasstelle erzielt, durch die der Elektrolyt in die Umgebung abgeblasen werden kann. Die Vertiefung sollte von den Elektroden beabstandet angeordnet sein. Anstelle der Vertiefung könnte es denkbar sein, in einem lokalen Bereich eine Dichtung mit geringem Anpressdruck auf die Siegelnaht zu realisieren. Dies kann durch einen lokal aufgebrachten elastomeren Werkstoff erfolgen, der eine höhere Elastizität als der elastomere Werkstoff der Dichtflächen zeigt. Hierdurch ist gewährleistet, dass unter normalen Prozessbedingungen ein Eindringen von Feuchtigkeit von außen am die Siegelnaht verhindert wird. Bei einem Störfall, bei dem das Ablassen des Elektrolyten notwendig wird, reicht dessen Überdruck aus, die lokal geschwächte Dichtung aufzuweiten. Eine solche gewünschte Schwachstelle könnte beispielsweise durch ein weicheres Elastomer, einen lokal geringeren Anpressdruck oder durch eine lokal unterschiedliche Anordnung erreicht werden. Alternativ könnte sie durch eine dünne Folie abgedeckt sein.

Der Grundkörper kann Bohrungen aufweisen. Durch Bohrungen können verschiedene nebeneinander angeordnete Dichtungsrahmen miteinander verbunden werden. Vor diesem Hintergrund ist auch denkbar, dass zwei Dichtungsrahmen im Sinne einer Nut-Federverbindung miteinander verbunden werden. Hierbei ist konkret denkbar, dass in einem Grundkörper Sacklöcher oder Bohrungen angeordnet sind, welche Zapfen eines weiteren Dichtungsrahmens aufnehmen.

Die Bohrungen können in Laschen ausgebildet sein, die vom Grundkörper abragen. Die Laschen erlauben einerseits, den Dichtungsrahmen problemlos zu ergreifen und andererseits, die Dichtflächen nicht durch Bohrungen zu schwächen oder zu vermindern. Zudem erlauben sie eine streng parallele Anordnung der nebeneinander angeordneten Zellen.

Der Grundkörper kann mit einem Klebstoff versehen sein. Vor diesem Hintergrund ist konkret denkbar, dass ein Klebeband auf dem Grundkörper angeordnet ist. Durch einen Klebstoff oder ein Klebeband können zwei Dichtungsrahmen miteinander verklebt oder der Dichtungsrahmen auf die Siegelnaht geklebt werden. Hierdurch ist ein rascher und prozesssicherer Aufbau von Stacks ermöglicht.

In den Dichtungsrahmen kann eine Kühleinrichtung integriert sein. Hierdurch können die Dichtungsrahmen in größeren Batterien verwendet werden, bei denen eine Kühlung der Zellen erforderlich ist. Vor diesem Hintergrund ist denkbar, dass die Kühleinrichtung als Metallkörper ausgebildet ist, der zwischen zwei elastisch komprimierbaren Schichten sandwichartig aufgenommen ist. Die elastische Dichtung der Siegelnaht könnte in anderen Bereichen dann für eine zusätzliche Abdichtung des Kühlkreislaufes verwendet werden, wobei die Wärmeübertragung von den Zellen auf die Kühleinrichtung vorzugsweise über die Siegelnähte erfolgt, die an den Metallkörpern anliegen. Dabei sollte der Metallkörper, insbesondere im Bereich der Elektroden-Ableitbleche gekapselt aufgenommen und vollständig von den Schichten umschlossen sein. Andere Ausgestaltungen der Kühleinrichtung umfassen einen besonders gut wärmeleitenden Lack, einen wärmeleitenden Thermoplasten oder ein wärmeleitendes Elastomer, Die Kühleinrichtung könnte thermisch leitende Elastomere umfassen, die mit einem äußeren Kühlkreislauf oder Kühlrippen in Kontakt stehen. Dieser Ausgestaltung stellt eine passive Kühlung dar.

Bei einer aktiven Kühlung könnten in oder zwischen den elastischen Dichtungsrahmen Kühlkanäle angebracht sein, durch die ein Kühlmedium strömt. Dabei kann das Kühlmedium durch mehrere zu einem Stack verbundene Dichtungsrahmen strömen und so mehrere Zellen temperieren. Hierdurch sind die Zellen zuverlässig kühlbar und homogen temperierbar.

Alternativ können durch Kühlkanale separate, thermisch leitende Rohre geführt werden, durch welches das Kühlmedium strömt. Hierdurch wird sicher gestellt, dass das Kühlmedium nicht mit der Zelloberfläche in stofflichen Kontakt gelangen kann.

Eine Batterie kann mindestens zwei Dichtungsrahmen der hier beschriebenen Art und mindestens eine Zelle umfassen, wobei die Zelle zwischen zwei Dichtungsrahmen positioniert ist, wobei die Zelle einen verdickten Bereich aufweist, der sich in die Öffnungen deren Grundkörper erstreckt und wobei die Zelle einen verjüngten Bereich aufweist, an welchem die Dichtungsflächen dichtend anliegen. Der verjüngte Bereich entspricht der Siegelnaht. Durch eine solche Anordnung von Zellen können deren Sollbruchstellen, die sich am verjüngten Bereich befinden, sandwichartig von zwei Dichtungsrahmen umgeben werden. Ein derartige erfindungsgemäße Batterie eignet sich für mobile Anwendungen, insbesondere in Fahrzeugen und Flugzeugen sowie für stationäre Anwendungen, beispielsweise für Systeme die eine unterbrechungsfreie Stromversorgung erfordern.

Vor diesem Hintergrund können die Dichtungsflächen den verjüngten Bereich zumindest bereichsweise sandwichartig zwischen sich aufnehmen und aneinander dichtend anliegen. Konkret ist denkbar, dass die Dichtungsflächen den verjüngten Bereich in einer der Öffnung zugewandten Zone sandwichartig umschließen und in einer Zone, welche der Öffnung abgewandt ist, direkt aneinander liegen. In der oberen Zone, die der Öffnung abgewandt ist, liegen die Dichtungsflächen dichtend aneinander und dichten das Innere der Zellen gegen schädliche Medien ab.

Zwischen den Dichtungsrahmen können Ableitbleche der Elektroden der Zellen aufgenommen sein, welche über die Dichtungsrahmen hinausragen. Die Dichtungsrahmen liegen dicht an den Ableitblechen an, so dass keine schädlichen Medien von außen nach innen oder von innen nach außen treten können. Die Ableitbleche ragen dabei über die Dichtungsrahmen hinaus, so dass sie problemlos kontaktiert werden können.

Zwischen den Dichtungsrahmen kann mindestens ein Sensor angeordnet sein, welcher Drücke erfasst. Durch einen solchen Sensor, insbesondere einen Drucksensor können sich aufblasende Zellen problemlos detektiert werden. Sich stark aufblasende Zellen stellen ein typisches Phänomen für schadhafte Zellen dar.

Die Zellen können als Coffee-Bag-Zellen mit einer Siegelnaht ausgestaltet sein, wobei der verjüngte Bereich der Zellen als Siegelnaht ausgestaltet ist. Coffee-Bag-Zellen zeichnen sich durch eine hohe Kapazität pro Bauvolumen aus. Konkret weisen Coffee-Bag-Zellen ein flexibles Zellgehäuse auf. Vielmehr ist das Zellgehäuse eine Folie, in welche das Innere der Zellen analog zum Kaffee in einer Kaffeepackung eingeschweißt ist. Diese Folie kann als Metallfolie ausgestaltet sein, welche beidseitig beschichtet ist. Diese Technik ermöglicht die Herstellung dünnerer Zellen und eine größere Designflexibilität. Weitere Vorteile sind eine höhere Energiedichte, die durch den kompakten Aufbau bewirkt wird, und niedrigere Herstellungskosten. Die Flexibilität des Designs macht die Zellen besonders attraktiv für den Mobiltelefon- und Computermarkt.

Vor diesem Hintergrund ist die Zelle als Lithium-Ionen-Zelle ausgestaltet. Darüber hinaus könnte die Zelle als Lithium-Polymer-Zelle ausgestaltet sein, bei der an Stelle eines flüssigen Elektrolyten eine Polymermatrix verwendet wird, die den Elektrolyten nahezu vollständig aufsaugt und nahezu auslaufsicher fixiert.

An der Batterie kann eine Abblashaube angeordnet sein. Hierdurch kann sichergestellt werden, dass abgeblasene Gase oder Elektrolyten sicher abgeleitet werden. Die Abblashaube kann aus Metall, Kunststoff oder einem Elastomer bestehen und muss gegenüber den Dichtungsrahmen abgedichtet sein. Die Abblashaube kann dabei mehrere nebeneinander angeordnete Vertiefungen überdecken. Gegebenenfalls könnte die Abblashaube mit einer Folie beziehungsweise einer Berstmembran ausgestattet sein, so dass sie unter Normalbedingungen Feuchtigkeit von der Siegelnaht der Coffee-Bag-Zellen fernhält. Die Abblashaube kann dann beispielsweise über einen Schlauch oder ein Rohr mit der Umgebung in Verbindung stehen. In diesen Schlauch oder in das Rohr kann zusätzlich ein Ventil eingebracht sein, welches nur bei anstehendem Überdruck von innen öffnet. Mit dieser Anordnung wäre sicher gestellt, dass bei Abblasen des Elektrolyten im Störfall der Batterie dieser sicher und gezielt aus dem Inneren der Batterie, insbesondere weg von den Elektroden abgeführt wird.

Die Batterie kann einen weiteren festen Fixierrahmen aufweisen. Der weitere feste Fixierrahmen könnte aus Kunststoff oder aus Metallen gefertigt sein, die mit nicht leitenden Materialien beschichtet sein können. Dieser feste Rahmen stellt zusätzlich sicher, dass auf die Dichtstellen ein konstanter und gleichmäßiger Anpressdruck erfolgt. Zudem ermöglicht der feste Rahmen eine verbesserte und sichere Montage des Stacks der mit den Dichtungsrahmen ausgestatteten Zellen im Gehäuse der Batterie. Zudem erleichtert eine solche Anordnung die Wartung und den Austausch schadhafter Zellen.

### Kurzbeschreibung der Zeichnung

Einige Ausführungsbeispiele des erfindungsgemäßen Dichtungsrahmens werden nachfolgend anhand der Zeichnung näher erläutert. Diese zeigt jeweils schematisch in
- Fig. 1: eine perspektivische Ansicht eines rechteckigen Dichtungsrahmens,
- Fig. 1a: eine Ansicht eines rechteckigen Dichtungsrahmens, auf den eine Dichtung aufgebracht ist,
- Fig. 1b: eine weitere Ansicht eines rechteckigen Dichtungsrahmens, auf den eine Dichtung mit einer Unterbrechung aufgebracht ist,
- Fig. 1c: eine Teilansicht einer Zelle, welche zwischen zwei Dichtungsrahmen gemäß Fig. 1 a aufgenommen ist,
- Fig. 1d: eine perspektivische Ansicht eines rechteckigen Dichtungsrahmens, in dem Kühlkanäle ausgebildet sind,
- Fig. 2: eine perspektivische Ansicht zweier aneinander anliegender Dichtungsrahmen,
- Fig. 3: eine Seitenansicht zweier aneinander anliegender Dichtungsrahmen,
- Fig. 4: einen Dichtungsrahmen, der einen starren Tragkörper umfasst, auf dem einseitig eine elastisch komprimierbare Schicht aufgebracht ist,
- Fig. 5: einen Dichtungsrahmen, bei welchem auf einem starren Tragkörper beidseitig elastisch komprimierbare Schichten aufgebracht sind,
- Fig. 6: einen Dichtungsrahmen, bei welchem das poröse Element Heizdrähte für eine elektrische Heizung enthält,
- Fig. 7: links eine Draufsicht auf eine Coffee-Bag-Zelle, aus welcher Elektroden herausragen, und rechts eine Seitenansicht der Coffee-Bag-Zelle,
- Fig. 8: eine schematische Ansicht eines Stacks von einzelnen Coffee-Bag-Zellen, zwischen denen Dichtungsrahmen angeordnet sind, wobei die Dichtungsrahmen von einem Fixierrahmen formschlüssig aneinander gepresst werden,
- Fig. 9: zwei aneinander liegende Dichtungsrahmen mit im Querschnitt bogenförmig ausgestalteten Vertiefungen sowie eine schematische Ansicht einer Abblashaube, die über den Vertiefungen angebracht ist und mit den Dichtungsrahmen formschlüssig verbunden ist,
- Fig. 10: einen Dichtungsrahmen mit einer integrierten Kühleinrichtung,
- Fig. 11: rechts eine Zelle mit flexibler Hülle im "Coffee Bag Design", welche formschlüssig über die umlaufende Siegelnaht in einem Dichtungsrahmen eingebunden ist, und links eine Draufsicht auf die Zelle und den Dichtungsrahmen,
- Fig. 12: zwei Zellen mit flexibler Hülle im "Coffee Bag Design", welche formschlüssig über die umlaufende Siegelnaht in mehreren Dichtungsrahmen eingebunden sind,
- Fig. 13: einen Dichtungsrahmen, welcher Heizmittel und/ oder Kühlmittel aufweist, die eine rasche Temperierung des Dichtungsrahmens und damit einer Zelle erlauben,
- Fig. 14: auf der linken Seite eine schematische Ansicht verschiedener Befestigungsmöglichkeiten eines porösen Elements am Dichtungsrahmen und auf der rechten Seite ein poröses Element, welches zwischen zwei Zellen positioniert ist,
- Fig. 15: links ein vollständig thermisch leitfähiges poröses Element, in der Mitte ein poröses Element, welches phasenändemde Materialien aufweist und rechts ein poröses Element, bei welchem nur die zellnahen Oberflächen thermisch leitfähig sind, und
- Fig. 16: ein poröses Element, welches zwischen zwei Zellen positioniert und an einen Dichtungsrahmen angebunden ist.

### Ausführung der Erfindung

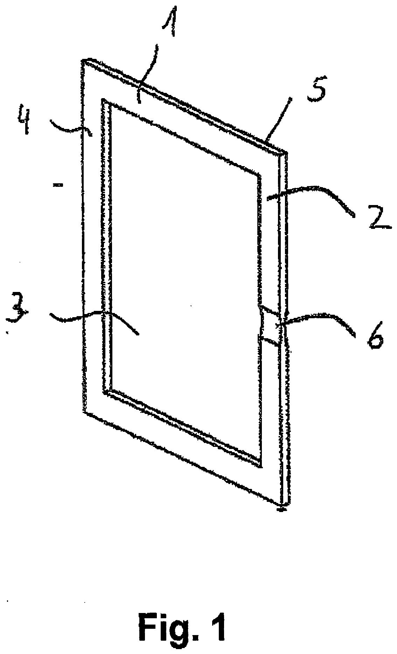

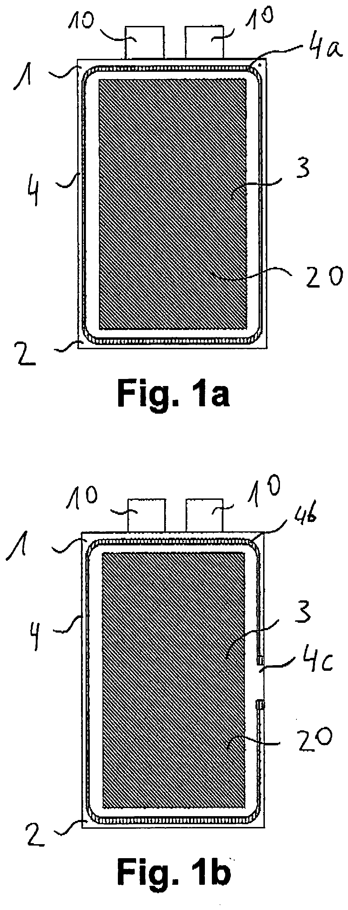

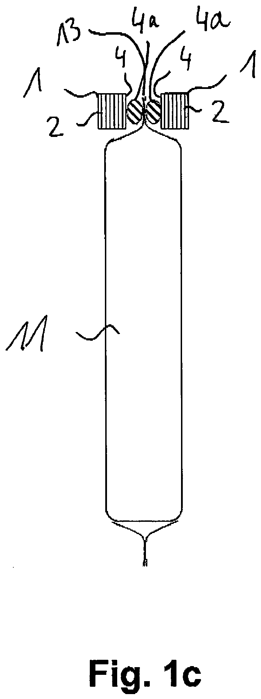

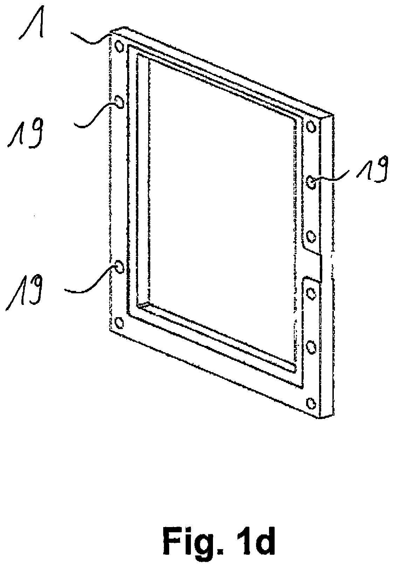

Figur 1 zeigt einen Dichtungsrahmen 1 zur Verwendung in einer Batterie, umfassend einen Grundkörper 2, wobei der Grundkörper 2 eine Öffnung 3 umgreift, wobei der Grundkörper 2 eine erste Dichtfläche 4 und eine gegenüberliegende zweite Dichtfläche 5 aufweist. Die erste Dichtfläche 4 und die zweite Dichtfläche 5 sind elastisch komprimierbar ausgebildet. Der Grundkörper 2 ist rechteckig ausgestaltet und weist vier Schenkel auf, welche die Öffnung 3 zusammenhängend umgeben. Die erste Dichtfläche 4 ist parallel zur zweiten Dichtfläche 5 orientiert, wobei beide Dichtflächen 4, 5 mit der Öffnung 3 fluchten.

Der Grundkörper 2 ist aus einem elastisch komprimierbaren Material gefertigt. In der ersten Dichtfläche 4 und der zweiten Dichtfläche 5 ist jeweils eine Vertiefung 6 ausgebildet, die im Querschnitt bogenförmig ausgebildet ist.

Figur 1 a zeigt einen weiteren Dichtungsrahmen 1, auf den eine umlaufende Dichtung 4a aufgebracht ist.

Figur 1b zeigt einen Dichtungsrahmen auf den eine teilweise umlaufende Dichtung 4b aufgebracht ist. Die teilweise umlaufende Dichtung 4b ist durch eine Unterbrechung 4c unterbrochen.

Figur 1c zeigt eine Teilansicht einer Zelle 11, die zwischen zwei Dichtungsrahmen 1 gemäß Figur 1a oder Figur 1b aufgenommen ist.

Figur 1d zeigt eine perspektivische Ansicht eines Dichtungsrahmens 1, in welchen eine Kühleinrichtung 19 integriert ist, die Kühlkanäle umfasst.

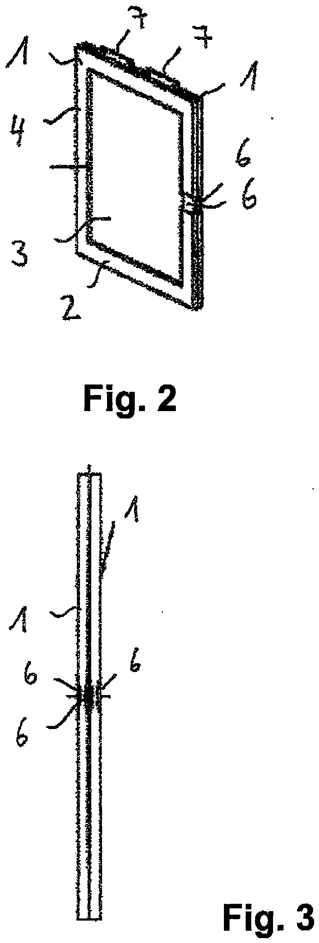

Figur 2 zeigt zwei gemäß Figur 1 gestaltete Dichtungsrahmen 1, die aneinanderliegend angeordnet sind, in einer perspektivischen Ansicht. Vom Grundkörper 2 ragen Laschen 7 ab, in denen Bohrungen angeordnet sein können. Durch die Bohrungen können die Dichtungsrahmen 1 mit Hilfe von Schrauben miteinander fixiert werden. Hierdurch kann ein konstanter und genügend hoher Anpressdruck über die gesamten Grundkörper 2 der Dichtungsrahmen 1 sichergestellt werden.

Figur 3 zeigt eine zweite Ansicht zweier aneinander liegender Dichtungsrahmen 1 gemäß Figur 2, wobei sich zwei bogenförmige Vertiefungen 6 zu einer Sollausblasstelle für einen Elektrolyten ergänzen.

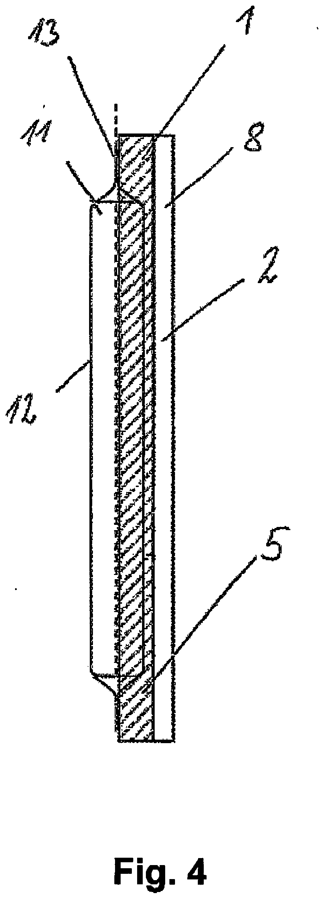

Figur 4 zeigt einen Dichtungsrahmen 1 mit einem Grundkörper 2, bei welchem die zweite Dichtfläche 5 als elastisch komprimierbare Schicht ausgebildet ist, die auf einem nicht elastischen Tragkörper 8 aufgebracht ist.

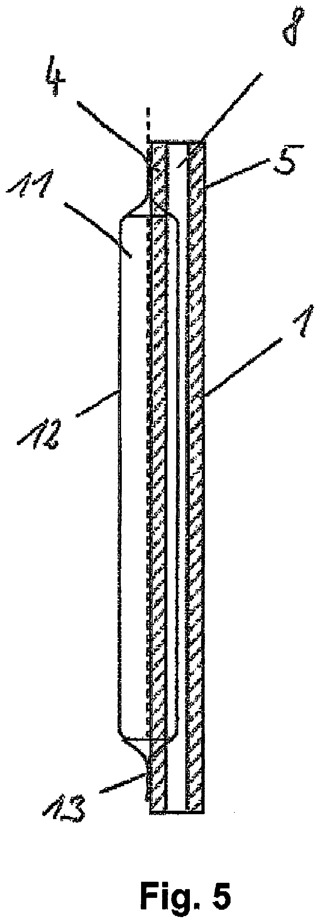

Figur 5 zeigt einen Dichtungsrahmen 1, bei welchem die erste Dichtfläche 4 und die zweite Dichtfläche 5 jeweils als elastisch komprimierbare Schichten ausgebildet sind. Die Schichten sind beidseitig auf einem nicht elastischen Tragkörper 8 aufgebracht. Der Tragkörper 8 wird sandwichartig von den komprimierbaren Schichten eingeschlossen.

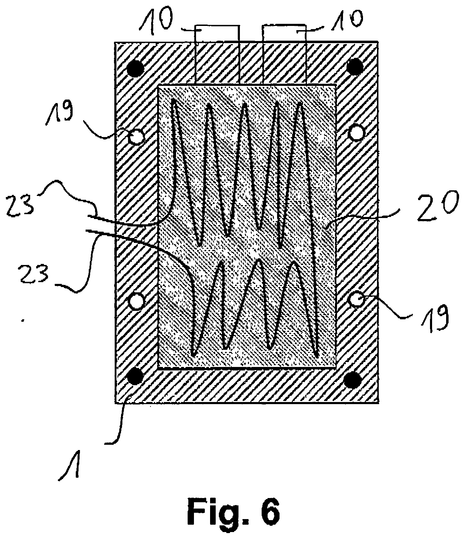

Figur 6 zeigt einen Dichtungsrahmen 1 mit einem porösen, komprimierbaren Element 20, nämlich einem Ausgleichselement. Das Element 20 enthält als Heizmittel 23 Heizdrähte für eine elektrische Heizung. Die Heizdrähte können dabei in einer separaten Heizfolie integriert sein, welche auf das Element 20 aufgebracht sind.

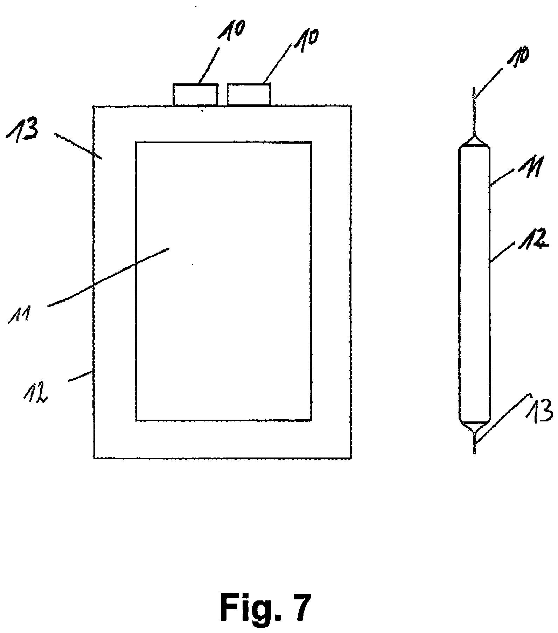

Figur 7 zeigt eine Zelle 11, welche als Coffee-Bag-Zelle ausgestaltet ist Links in Figur 7 ist eine Draufsicht der Zelle 11 gezeigt. Das Innere der Zelle 11, nämlich der Elektroden/Separatorstapel, befindet sich im Zellgehäuse 12, welches aus einem beschichteten Metall besteht. Ganz konkret wird Aluminium mit einer Polyolefin-Beschichtung versehen. Typische Breiten und Längen des Zellgehäuses 12 von Zellen 11, die in Elektrofahrzeugen verwendet werden, betragen typischerweise mehr als 20 cm. Solche Zellgehäuse 12 und sind etwa 1 cm dick. Das Zellgehäuse 12 weist eine umlaufende circa 1 cm breite Siegelnaht 13 auf, an welcher zwei beschichtete Metalle, nämlich die Folien, dicht zusammen laminiert sind. Die typische Dicke der Siegelnaht 13 beträgt etwa 1 bis 2 mm. Aus der Siegelnaht 13 ragen die Ableitbleche 10 der Elektroden heraus. Die Ableitbleche 10 sind aus Metall und sind üblicherweise weniger als 1 mm dick. Rechts in Figur 7 ist eine Seitenansicht der Zelle 11 gezeigt.

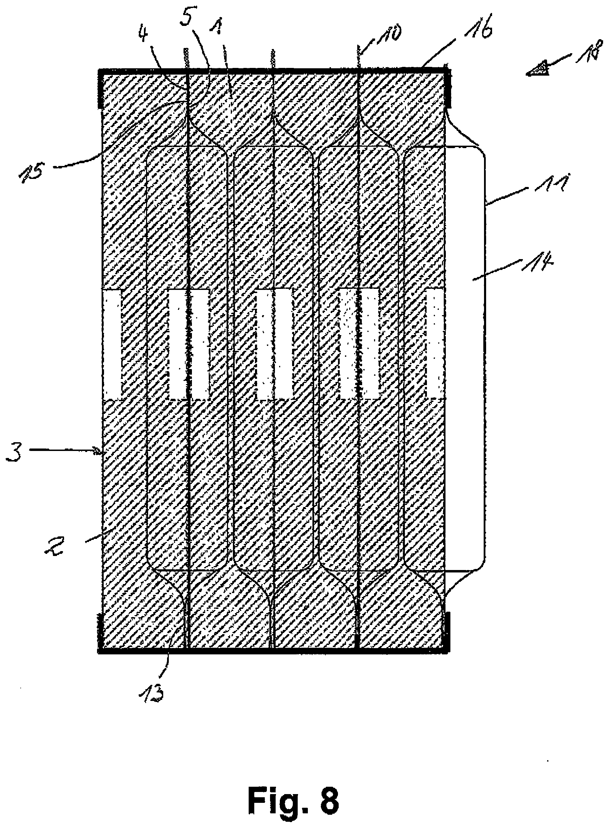

Figur 8 zeigt einen Stack mehrerer Zellen 11, welche im Bereich der Siegelnaht 13 voneinander beabstandet sind. Die Siegelnähte 13 werden durch die Dichtungsrahmen 1 verpresst. Dabei umgibt ein Dichtungsrahmen 1 die Zelle 11 umfänglich. Die Ableitbleche 10 der Elektroden stehen aus den Dichtungsrahmen 1 heraus. Die Dichtungsrahmen 1 ragen über die Siegelnähte 13 heraus. Hierdurch ist eine Versiegelung gegen Feuchtigkeit aus der Atmosphäre gegeben, da zwei benachbarte Dichtungsrahmen 1 in der über die Siegelnähte 13 herausragenden Zone unmittelbar aneinanderliegen. Denkbar ist auch, dass die Dichtungsrahmen 1 miteinander formschlüssig verkrallt sind. Vorzugsweise sind zwischen benachbarten Zellen 11 Pufferabstände ausgebildet, die ausreichend durch die Dichtungsrahmen 1 abgedeckt sind. Hierdurch kann sichergestellt werden, dass bei auftretender maximaler Dicke der Zellen 11 kein zusätzlicher Druck auf die Siegelnähte 13 entsteht.

Diese Figur zeigt konkret auch eine Batterie 18, umfassend mindestens zwei Dichtungsrahmen 1 und mindestens eine Zelle 11, wobei eine Zelle 11 zwischen zwei Dichtungsrahmen 1 positioniert ist, wobei die Zelle 11 einen verdickten Bereich 14 aufweist, der sich in die Öffnungen 3 der Grundkörper der Dichtungsrahmen 1 erstreckt, und wobei die Zelle 11 einen verjüngten Bereich 15 aufweist, an welchen die Dichtungsflächen 4, 5 dichtend anliegen. Die Dichtungsflächen 4, 5 nehmen den verjüngten Bereich 15 bereichsweise sandwichartig zwischen sich auf und liegen darüber hinaus aneinander dichtend an. Der verjüngte Bereich 15 ist als Siegelnaht 13 ausgebildet. Der verdickte Bereich 14 umschließt das Innere der Zelle 11, nämlich den Elektroden/Separatorstapel. Zwischen den Dichtungsrahmen 1 sind Ableitbleche 10 der Elektroden der Zellen 11 aufgenommen, welche über die Dichtungsrahmen 1 hinausragen. Die Dichtungsrahmen 1 werden durch einen Fixierrahmen 16 platziert, welcher die Dichtungsrahmen 1 aneinander presst. Hierbei ist sicherzustellen, dass die Flächenpressung auf die Dichtungsrahmen 1 etwa konstant ist.

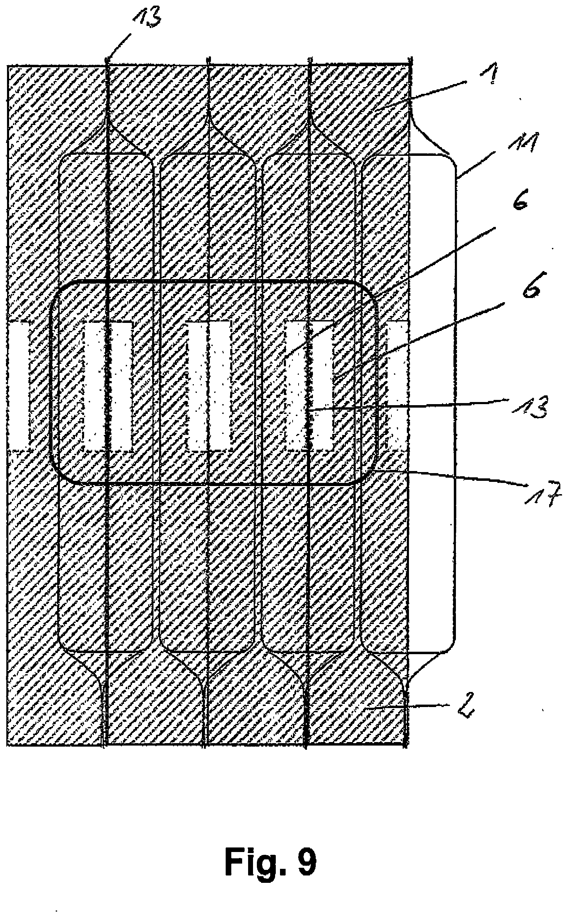

Figur 9 zeigt zwei aneinanderliegende Dichtungsrahmen 1, deren Vertiefungen 6 sich zu einer Sollausblasstelle ergänzen. Die Siegelnaht 13 hat hierbei Kontakt zur Atmosphäre. Zwei bogenförmige Vertiefungen 6 ergänzen sich zu einem ganzen Loch. Hierdurch wird eine Sollausblasstelle erzielt, die nicht an der Siegelnaht 13 pressend anliegt und dadurch einem austretenden Elektrolyten einen Weg nach außen gewährt. Die Vertiefungen 6 sollten möglichst weit entfernt von den Ableitblechen 10 der Elektroden angeordnet sein. Über den Vertiefungen 6 der Dichtungsrahmen 1 ist eine Abblashaube 17 angeordnet, die mit dem Dichtungsrahmen 1 einen Formschluss eingeht. Die Abblashaube 17 erlaubt einen sicheren Abtransport von aus den Vertiefungen 6 emittierten Elektrolytgasen.

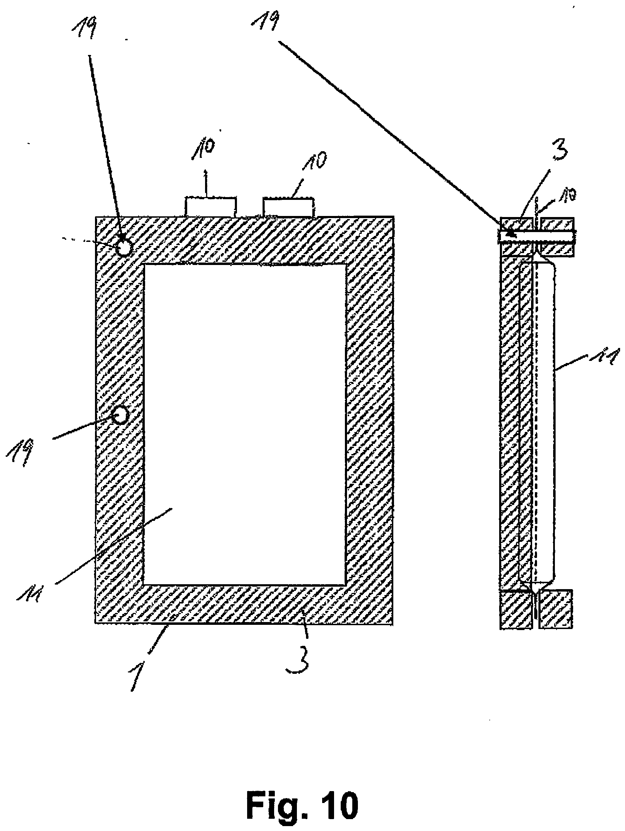

Figur 10 zeigt links in einer Draufsicht einen Dichtungsrahmen gemäß Figur 1. In den Grundkörper 2 ist eine Kühleinrichtung 19, in dieser Ausgestaltung rohrförmige Kühlkanäle, integriert. Der Dichtungsrahmen 1 ist in dieser Ausgestaltung thermisch leitfähig ausgestaltet. Ein Sandwich-Aufbau, wie in den Figuren 4 und 5 beschrieben, ist auch hier denkbar. Rechts in Figur 10 ist eine Seitenansicht der linken Anordnung gezeigt.

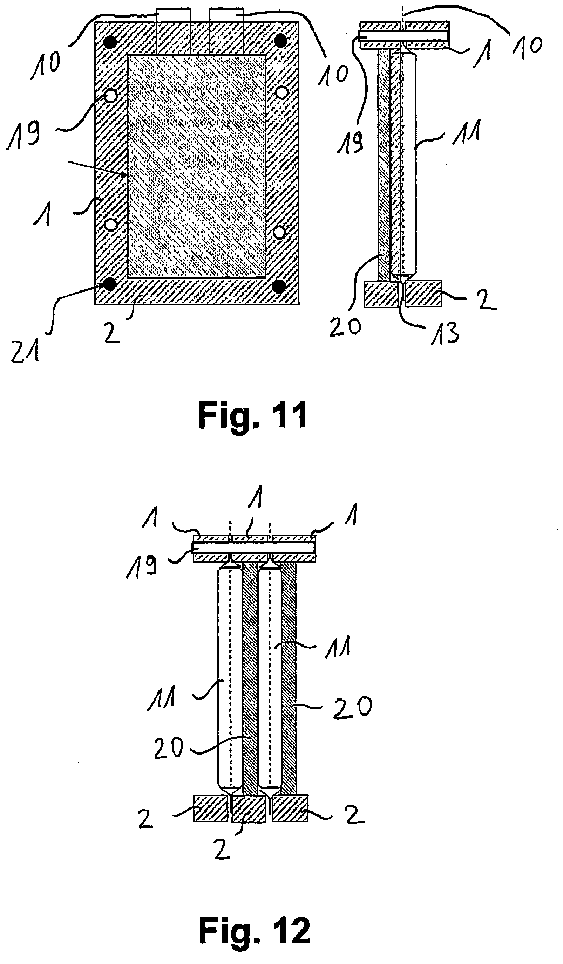

Figur 11 zeigt rechts eine Zelle 11 mit flexibler Hülle im "Coffee-Bag-Design", welche an ihrer umlaufenden Siegelnaht 13 zwischen zwei Dichtungsrahmen 1 formschlüssig eingebunden ist. Die Ableitbleche 10 der Elektroden stehen dabei über den Dichtungsrahmen 1 über.

An der Zelle 11 liegt ein flexibles und reversibel komprimierbares, poröses Element 20 an, welches mit dem Dichtungsrahmen 1 und der Zelle 1 in direktem thermischem Kontakt steht Das flexible, poröse Element 20 kann vollständig, auf seinen beiden den Zellen 11 zugewandten Oberflächen oder auch nur auf einer einer Zelle 11 zugewandten Oberfläche thermisch leitfähig sein. Das poröse Element 11 kann als Vlies ausgestaltet sein, in welchem thermisch puffernde phasenändemde Materialien, sogenannte "Phase Change Materials", aufgenommen sind.

Im Dichtungsrahmen 1 ist eine Kühleinrichtung 19 ausgebildet, die Kühlkanäle umfasst. Die Kühlkanäle sind orthogonal zu den Dichtflächen 4, 5 orientiert.

Die Kühlkanäle können das Material, aus dem der Dichtungsrahmen 1 gefertigt ist, und damit die Zelle 11 temperieren. Dies kann über einen direkten Kontakt der Siegelnaht 13 und indirekt über einen flächigen Kontakt der Zellen 11 erfolgen.

Links in Fig. 11 ist eine Draufsicht auf den Dichtungsrahmen 1, die Zelle 11 sowie das poröse Element 20 gezeigt. Parallele Dichtungsrahmen 1 können miteinander fest verbunden werden. Dies kann durch schematisch dargestellte Schrauben 21, Klemmen o.ä erfolgen.

Figur 12 zeigt eine Anordnung gemäß Figur 11, wobei zwei Zellen 11 zwischen drei Dichtungsrahmen 1 dargestellt sind. Die Kühlkanäle der Dichtungsrahmen 1 fluchten derart miteinander, dass ein einziger durchgehender Kühlkanal gebildet ist.

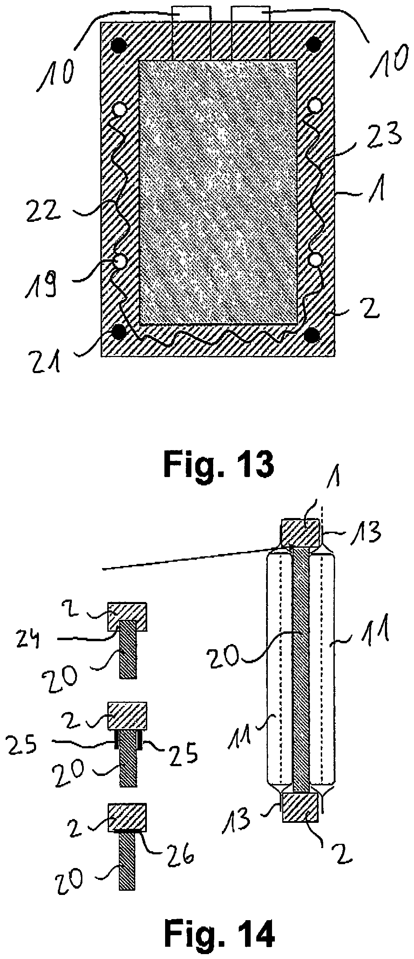

Figur 13 zeigt einen Dichtungsrahmen 1, in welchem neben den orthogonal zu den Dichtflächen 4, 5 orientierten Kühlkanälen weitere Kühlmittel 22 und/oder Heizmittel 23 integriert sind, die sich längs der Dichtflächen 4, 5 erstrecken. Die Kühlmittel 22 und/ oder Heizmittel 23 durchsetzen den Grundkörper 2 zumindest teilweise entlang der Längsausdehnung der Dichtflächen 4, 5. Die Kühlmittel 22 sind als Kühlschlangen ausgebildet. Die Kühlschlangen verbinden die orthogonal orientierten Kühlkanäle der Kühleinrichtung 19 fluidleitend. Die Heizmittel 23 sind als Heizdrähte ausgestaltet und lediglich schematisch dargestellt.

Figur 14 zeigt in der linken oberen Ansicht ein poröses Element 20, welches in einer Aussparung 24 im Grundkörper 2 aufgenommen ist. Fig. 14 zeigt in der linken mittleren Ansicht ein poröses Element 20, welches durch Befestigungslaschen 25 am Grundkörper 2 festgelegt ist. Fig. 14 zeigt in der linken unteren Ansicht ein poröses Element 20, welches durch eine Klebstoffschicht 26 am Grundkörper 2 festgelegt ist.

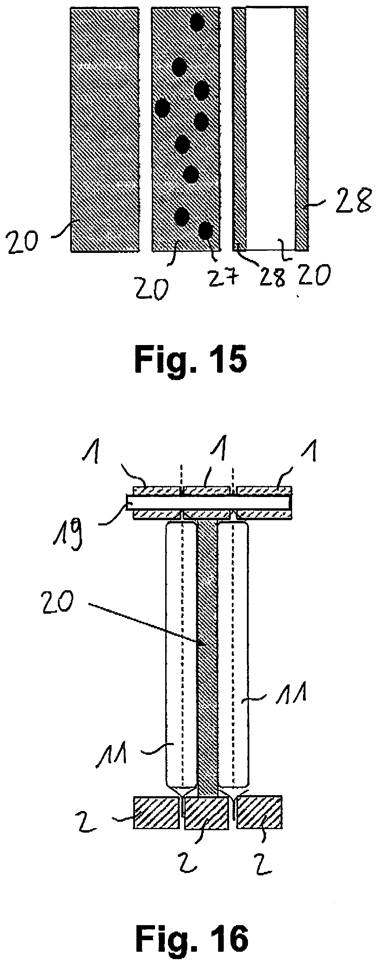

Figur 15 zeigt in der linken Ansicht ein poröses Element 20, welches vollständig thermisch leitfähig ist. Figur 15 zeigt in der mittleren Ansicht ein poröses Element 20, in welchem phasenändemde Materialien 27 aufgenommen sind. Figur 15 zeigt in der rechten Ansicht ein poröses Element 20, welches beidseitig eine Beschichtung 28 aufweist, die thermisch leitfähig ist. Die Beschichtung 28 kann auch nur einseitig aufgebracht sein. Die Beschichtung 28 kann als Metallfolie ausgestaltet sein.

Figur 16 zeigt eine Anordnung zweier Zellen 11, die zwischen sich ein poröses Element 20 aufnehmen, das an den Teilen 11 anliegt.

Das poröse Element 20 kann als Vlies oder Vliesstoff ausgestaltet sein oder eines oder mehrere Vliese bzw. Vliesstoffe enthalten. Dabei sind folgende Vliese und Kombinationen aus behandelten oder unbehandelten Vliesen realisierbar
a) Ein Vlies des Typs FS 22345 (Polyester-Nassvlies), welches beidseitig mit Aluminium beschichtet ist. Ein Vlies aus Polyester ist vorteilhaft, da es chemisch resistent gegenüber im Schadensfall austretendem Elektrolyt einer Batterie ist.
b) Ein Vlies des Typs FS 22345 (Polyester-Nassvlies), welches beidseitig mit einer Aluminium-Folie belegt ist.
c) Ein Vlies des Typs FS 22345 (Polyester-Nassvlies), welches mit leitendem Ruß beschichtet ist.
d) Ein Vlies des Typs FS 22345 (Polyester-Nassvlies), welches mit thermisch leitfähigem Aluminiumoxid beschichtet ist.
e) Ein Vlies des Typs T1700-186 (Freudenberg Fuel Cell Component Technology) aus Graphit-Fasern.
f) Ein Metall-Vliesstoff.
   Das als Vlies ausgestaltete oder Vliese und/ oder Vliesstoffe umfassende poröse Element 20 könnte phasenändemde Materialien 27 aufweisen.
   Dabei sind folgende Modifikationen realisierbar:
g) Ein Vlies des Typs FS 22345 (Polyester-Nassvlies) wird mit RUBITHERRM RT 25 (Paraffin; Schmelzpunkt 26 °C; Schmelzenthalpie 232 kJ/kg; Menge = 100 g/m²) beschichtet, welches mit Binder fixiert ist.
h) Zwischen zwei Lagen eines Vlieses des Typs FS 22345 (Polyester Nassvlies), ist RUBITHERRM RT 25 in einer Menge von 100 g/m² eingebracht, welches mit Binder fixiert ist.
   Die Modifikationen gemäß g) und h) können analog mit Mengen von 500 g/m² ausgeführt werden.
i) Zwischen zwei Lagen eines Vlieses des Typs FS 22345 (Polyester-Nassvlies), ist RUBITHERRM RT 5 (Paraffin; Schmelzpunkt 9 °C; Schmelzenthalpie 205 kJ/kg; Menge =100 g/m²) eingebracht, welches mit Binder fixiert ist.
j) Zwischen zwei Lagen eines Vlieses des Typs FS 22345 (Polyester Nassvlies), ist CLIMSEL S 32 der Fa. Climator (Salzhydrat; Schmelzpunkt 32 °C; Schmelzenthalpie 212 kJ/kg; Menge =100 g/m²) eingebracht, welches mit Binder fixiert ist.
k) Zwischen zwei Lagen eines Vlieses des Typs FS 22345 (Polyester-Nassvlies), ist CLIMSEL S 48 der Fa. Climator (Salzhydrat; Schmelzpunkt 48 °C; Schmelzenthalpie 227 kJ/kg; Menge = 100 g/m²) eingebracht, welches mit Binder fixiert ist.
l) Zwischen zwei Lagen eines Vlieses des Typs FS 22345 (Polyester-Nassvlies), ist 36 S der Fa. PCM Energy P. Ltd (Salzhydrat; Schmelzpunkt 36 °C; Schmelzenthalpie 260 kJ/kg; Menge =100 g/m²) eingebracht, welches mit Binder fixiert ist.
m) Zwischen zwei Lagen eines Vlieses des Typs FS 22345 (Polyester Nassvlies), sind je 50 g/m² der beiden phasenändemden Materialien RUBITHERRM RT 5 (Paraffin; Schmelzpunkt 9 °C; Schmelzenthalpie 205 kJ/kg) und CLIMSEL S 48 der Fa. Climator (Salzhydrat; Schmelzpunkt 48 °C; Schmelzenthalpie 227 kJ/kg) eingebracht, welche mit Binder fixiert sind.
n) Zwei Lagen eines Vlieses des Typs FS 22345 (Polyester-Nassvlies) sind außer mit phasenändemden Materialien 27 auch mit Leitruß in einer Menge von jeweils 50 g/m² beschichtet.
o) Ein Vlies mit phasenändemden Materialien 27 gemäß Modifikation j) ist nach Ausrüstung mit den phasenändemden Materialien leitfähig mit Aluminium beschichtet, vorzugsweise durch eine CVD-Verfahren.
p) Auf ein Vlies mit phasenändemden Materialien 27 gemäß Modifikation j), ist nach Ausrüstung mit den phasenändemden Materialien beidseitig eine Folie aus Aluminium aufgeklebt.

Alle zuvor genannten phasenändemden Materialien 27 sind verkapselt.

In der nachfolgenden Tabelle sind Daten angegeben, welche die Effektivität der Kühlung quantifizieren.

| | Elektroden-Kühlung | Siegelnaht-Kühlung | Flächen-Kühlung |
|---|---|---|---|
| Effektive QuerschnittsFläche | 2 * 50*0.2 mm² = 20 mm² | 2 * 1000 * 5 mm² = 10.000 mm² | 2 * 200 * 300 mm² = 120.000 mm² |
| Wärmedurchgangs-Koeffizient | x | 0.1 x | 0.01 x |
| Produkt Querschnitt * Wärmedurchgangskoeffizient | 20 x | 1.000 x | 1.200 x |
| Kühlungs-Effizienz (Elektroden-Kühlung = 1) | 1 | 50 | 60 |
| Heizung möglich | NEIN | Ja | Ja |

Die hier beschriebene Technik erlaubt die Kühlung bzw. Temperierung einer Zelle 11 sowohl über die Siegelnaht 13 als auch über die Fläche der Zelle 11. Hierdurch wird die Effektivität der Temperierung erhöht.

In der nachfolgenden Liste sind phasenändemde Materialien 27 dargestellt, welche kommerziell erhältlich sind:

**Commercial PCMs available in the market**

| PCM name | Type of product | Melting temperature (°C) | Heat of fusion (kJ/kg) | Density (kg/ m³) | Source |
|---|---|---|---|---|---|
| SN33 | Salt solution | -33 | 245 | 1.24 | Cristopia [41] |
| TH-31 | n. a. | -31 | 131 | n. a. | TEAP [42] |
| SN29 | Salt solution | -29 | 233 | 1.15 | Cristopia [41] |
| SN26 | Salt solution | -26 | 268 | 1.21 | Cristopia [41] |
| TH-21 | n. a. | -21 | 222 | n. a. | TEAP [42] |
| SN21 | Salt solution | -21 | 240 | 1.12 | Cristopia [41] |
| STL-21 | Salt solution | -21 | 240 | 1.12 | Mitsubishi Chemical [43] |
| SN18 | Salt solution | -18 | 268 | 1.21 | Cristopia [41] |
| TH-16 | n. a. | -16 | 289 | n. a. | TEAP [42] |
| STL-16 | n. a. | -16 | n. a. | n. a. | Mitsubishi Chemical [43] |
| SN15 | Salt solution | -15 | 311 | 1.02 | Cristopia [41] |
| SN12 | Salt solution | -12 | 306 | 1.06 | Cristopia [41] |
| STLN10 | Salt solution | -11 | 271 | 1.05 | Mitsubishi Chemical [43] |
| SN10 | Salt solution | -11 | 310 | 1.11 | Cristopia [41] |
| TH-10 | n. a. | -10 | 283 | n. a. | TEAP [42] |
| STL-6 | Salt solution | -6 | 284 | 1.07 | Mitsubishi Chemical [43] |
| SN06 | Salt solution | -6 | 284 | 1.07 | Cristopia [41] |
| TH-4 | n. a. | -4 | 286 | n. a. | TEAP [42] |
| STL-3 | Saltsolution | -3 | 328 | 1.01 | Mitsubishi Chemical [43] |
| SN03 | Saltsolution | -3 | 328 | 1.01 | Cristopia [41] |
| ClimSel C 7 | n. a. | 7 | 130 | n. a. | Climator [44] |
| RT5 | Paraffin | 9 | 205 | n. a. | Rubitherm GmbH [45] |
| ClimSel C 15 | n. a. | 15 | 130 | n. a. | Climator [44] |
| ClimSel C 23 | Salt hydrate | 23 | 148 | 1.48 | Climator [44] |
| RT25 | Paraffin | 26 | 232 | | Rubitherm GmbH [45] |
| STL27 | Salt hydrate | 27 | 213 | 1.09 | Mitsubishi Chemical [43] |
| S27 | Salt hydrate | 27 | 207 | 1.47 | Cristopia [41] |
| RT30 | Paraffin | 28 | 206 | n. a. | Rubitherm GmbH [45] |
| TH29 | Salt hydrate | 29 | 188 | n. a. | TEAP [42] |
| ClimSel C 32 | Salt hydrate | 32 | 212 | 1.45 | Climator [44] |
| RT40 | Paraffin | 43 | 181 | n. a. | Rubitherm GmbH [45] |
| STL47 | Salt hydrate | 47 | 221 | 1.34 | Mitsubishi Chemical [43] |
| ClimSel C 48 | n. a. | 48 | 227 | 1.36 | Climator [44] |
| STL52 | Salt hydrate | 52 | 201 | 1.3 | Mitsubishi Chemical [43] |
| RT50 | Paraffin | 54 | 195 | n. a. | Rubitherm GmbH [45] |
| STL55 | Salt hydrate | 55 | 242 | 1.29 | Mitsubishi Chemical [43] |
| TH58 | n. a. | 58 | 226 | n. a. | TEAP [42] |
| ClimSel C 58 | n. a. | 58 | 259 | 1.46 | Climator [44] |

## Patentansprüche

1. Anordnung zur Verwendung in einer Batterie, umfassend einem Dichtungsrahmen (1) mit einem Grundkörper (2), wobei der Grundkörper (2) eine Öffnung (3) umgreift, wobei der Grundkörper (2) eine erste Dichtfläche (4) und eine gegenüberliegende zweite Dichtfläche (5) aufweist, wobei die erste Dichtfläche (4) und/ oder die zweite Dichtfläche (5) elastisch komprimierbar ausgebildet ist und wobei im Grundkörper (2) Kühlmittel (22) und/ oder Heizmittel (23) integriert sind, welche den Grundkörper (2) zumindest teilweise entlang der Längsausdehnung der Dichtflächen (4, 5) durchsetzen, **dadurch gekennzeichnet, dass** der Öffnung (3) ein poröses und komprimierbares Element (20) zugeordnet ist, wobei das Element (20) am Grundkörper (2) festgelegt ist.

2. Anordnung nach Anspruch 1, **dadurch gekennzeichnet, dass** die Kühlmittel (22) als Kühlkanäle ausgestaltet sind.

3. Anordnung nach Anspruch 1 oder 2, **dadurch gekennzeichnet, dass** die Kühlmittel (22) als Kühlschlangen ausgestaltet sind.

4. Anordnung nach einem der Ansprüche 1 bis 3, **dadurch gekennzeichnet, dass** die Heizmittel (23) als Heizdrähte ausgestaltet sind.

5. Anordnung nach einem der Ansprüche 1 bis 4, **dadurch gekennzeichnet, dass** das poröse Element (20) als Vlies oder Vliesstoff ausgestaltet ist oder Vliese und/ oder Vliesstoffe aufweist.

6. Anordnung nach einem der Ansprüche 1 bis 5, **dadurch gekennzeichnet, dass** das poröse Element (20) thermisch leitfähig ausgestaltet ist.

7. Anordnung nach einem der Ansprüche 1 bis 6, **dadurch gekennzeichnet, dass** das poröse Element (20) durch eine Beschichtung (28) thermisch leitfähig ausgerüstet ist.

8. Anordnung nach Anspruch 7, **dadurch gekennzeichnet, dass** die Beschichtung (28) Metall, Ruß oder Keramik aufweist.

9. Anordnung nach einem der Ansprüche 1 bis 8, **dadurch gekennzeichnet, dass** das poröse Element (20) thermisch leitfähige Fasern aufweist.

10. Anordnung nach einem der Ansprüche 1 bis 9, **dadurch gekennzeichnet, dass** das poröse Element (20) mit mindestens einer Metallfolie versehen ist.

11. Anordnung nach einem der Ansprüche 1 bis 10, **dadurch gekennzeichnet, dass** das poröse Element (20) mit dem Anordnung (1) verklebt ist.

12. Anordnung nach einem der Ansprüche 1 bis 10, **dadurch gekennzeichnet, dass** das poröse Element (20) durch Vulkanisation mit dem Anordnung (1) verbunden ist.

13. Anordnung nach einem der Ansprüche 1 bis 10, **dadurch gekennzeichnet, dass** das poröse Element (20) in den Anordnung (1) eingeklemmt ist.

14. Anordnung nach einem der Ansprüche 1 bis 13, **dadurch gekennzeichnet, dass** das poröse Element (20) erste phasenändernde Materialien (27) enthält, welche innerhalb eines ersten Temperaturbereichs einen Phasenübergang von einer festen Phase in eine flüssige Phase ausführen, wobei das poröse Element (20) zweite phasenändernde Materialien (27) enthält, welche innerhalb eines zweiten Temperaturbereichs einen Phasenübergang von einer festen Phase in eine flüssige Phase ausführen.

15. Anordnung nach einem der Ansprüche 1 bis 14, **dadurch gekennzeichnet, dass** das poröse Element (20) phasenändernde Materialien (27) enthält, welche innerhalb eines Temperaturbereichs von 10° C bis 40°C einen Phasenübergang von einer festen Phase in eine flüssige Phase ausführen.

16. Anordnung nach Anspruch 14 oder 15, **dadurch gekennzeichnet, dass** die phasenändernden Materialien (27) ausschließlich aus organischen Stoffen bestehen.

17. Anordnung nach Anspruch 14 oder 15, **dadurch gekennzeichnet, dass** die phasenändernden Materialien (27) ausschließlich aus anorganischen Stoffen bestehen.

18. Anordnung nach einem der Ansprüche 1 bis 17, dadurch gekenzeichnet, dass in das poröse Element (20) zusätzliche Heizmittel (23) integriert sind.

19. Anordnung nach einem der Ansprüche 14 bis 18, **dadurch gekennzeichnet, dass** die phasenändernden Materialien (27) gekapselt sind.

20. Anordnung nach einem der Ansprüche 1 bis 19, **dadurch gekennzeichnet, dass** der Grundkörper (2) aus einem elastisch komprimierbaren Material gefertigt ist.

21. Anordnung nach einem der Ansprüche 1 bis 20, **dadurch gekennzeichnet, dass** die erste Dichtfläche (4) und/ oder die zweite Dichtfläche (5) als elastisch komprimierbare Schicht ausgebildet ist, die auf einem nichtelastischen Tragkörper (8) aufgebracht ist.

22. Anordnung nach einem der Ansprüche 1 bis 21, **dadurch gekennzeichnet, dass** in der ersten Dichtfläche (4) und/oder der zweiten Dichtfläche (5) eine Vertiefung (6) ausgebildet ist.

23. Anordnung nach einem der Ansprüche 1 bis 22, **dadurch gekennzeichnet, dass** in der ersten Dichtfläche (4) und/oder der zweiten Dichtfläche (5) ein lokaler Bereich höherer Elastizität vorgesehen ist.

24. Anordnung nach einem der Ansprüche 1 bis 23, **dadurch gekennzeichnet, dass** der Grundkörper (2) Bohrungen aufweist und dass die Bohrungen in Laschen (7) ausgebildet sind, die vom Grundkörper (2) abragen.

25. Anordnung nach einem der Ansprüche 1 bis 24, **dadurch gekennzeichnet, dass** der Grundkörper (2) mit einem Klebstoff versehen ist.

26. Batterie (18), umfassend mindestens zwei Anordnung (1) nach einem der voranstehenden Ansprüche und mindestens eine Zelle (11), wobei die Zelle (11) zwischen zwei Anordnung (1) positioniert ist, wobei die Zelle (11) einen verdickten Bereich (14) aufweist, der sich in die Öffnungen (3) deren Grundkörper (2) erstreckt und wobei die Zelle (11) einen verjüngten Bereich (15) aufweist, an welchem die Dichtungsflächen (4, 5) dichtend anliegen.

27. Batterie nach Anspruch 26, **dadurch gekennzeichnet, dass** die Dichtungsflächen (4, 5) den verjüngten Bereich (15) zumindest bereichsweise sandwichartig zwischen sich aufnehmen und aneinander dichtend anliegen.

28. Batterie nach Anspruch 26 oder 27, **dadurch gekennzeichnet, dass** zwischen den Anordnung (1) Ableitbleche (10) der Elektroden der Zellen (11) aufgenommen sind, welche über die Anordnung (1) hinausragen.

29. Batterie nach einem der Ansprüche 26 bis 28, **dadurch gekennzeichnet, dass** zwischen den Anordnung (1) mindestens ein Sensor angeordnet ist, welcher Drücke erfasst.

30. Batterie nach einem der Ansprüche 26 bis 29, **dadurch gekennzeichnet, dass** die Zellen (11) als Coffee-Bag-Zellen mit einer Siegeinaht (13) ausgestaltet sind.

31. Batterie nach einem der Ansprüche 26 bis 30, **dadurch gekennzeichnet, dass** an der Batterie (18) eine Abblashaube (17) angeordnet ist.

## Claims

1. Arrangement for use in a battery, comprising a sealing frame (1) having a main body (2), wherein the main body (2) surrounds an opening (3), wherein the main body (2) has a first sealing face (4) and an opposing second sealing face (5), wherein the first sealing face (4) and/or the second sealing face (5) is designed so as to be elastically compressible, and wherein cooling means (22) and/or heating means (23) are integrated into the main body (2) and run through the main body (2) at least partially along the longitudinal extent of the sealing faces (4, 5), **characterized in that** the opening (3) is assigned a porous and compressible element (20), wherein the element (20) is secured to the main body (2).

2. Arrangement according to Claim 1, **characterized in that** the cooling means (22) are configured as cooling channels.

3. Arrangement according to Claim 1 or 2, **characterized in that** the cooling means (22) are configured as cooling coils.

4. Arrangement according to one of Claims 1 to 3, **characterized in that** the heating means (23) are configured as heating wires.

5. Arrangement according to one of Claims 1 to 4, **characterized in that** the porous element (20) is configured as a nonwoven or nonwoven material, or has nonwovens and/or nonwoven materials.

6. Arrangement according to one of Claims 1 to 5, **characterized in that** the porous element (20) is thermally conductive.

7. Arrangement according to one of Claims 1 to 6, **characterized in that** the porous element (20) is thermally conductive by means of a coating (28).

8. Arrangement according to Claim 7, **characterized in that** the coating (28) has metal, carbon black or ceramic.

9. Arrangement according to one of Claims 1 to 8, **characterized in that** the porous element (20) has thermally conductive fibres.

10. Arrangement according to one of Claims 1 to 9, **characterized in that** the porous element (20) is provided with at least one metal foil.

11. Arrangement according to one of Claims 1 to 10, **characterized in that** the porous element (20) is adhesively bonded to the arrangement (1).

12. Arrangement according to one of Claims 1 to 10, **characterized in that** the porous element (20) is connected to the arrangement (1) by vulcanization.

13. Arrangement according to one of Claims 1 to 10, **characterized in that** the porous element (20) is wedged into the arrangement (1).

14. Arrangement according to one of Claims 1 to 13, **characterized in that** the porous element (20) contains first phase-change materials (27) which change phase from a solid to a liquid within a first temperature range, wherein the porous element (20) contains second phase-change materials (27) which change phase from a solid to a liquid within a second temperature range.

15. Arrangement according to one of Claims 1 to 14, **characterized in that** the porous element (20) contains phase-change materials (27) which change phase from a solid to a liquid within a temperature range between 10°C and 40°C.

16. Arrangement according to Claim 14 or 15, **characterized in that** the phase-change materials (27) consist exclusively of organic substances.

17. Arrangement according to Claim 14 or 15, **characterized in that** the phase-change materials (27) consist exclusively of inorganic substances.

18. Arrangement according to one of Claims 1 to 17, **characterized in that** additional heating means (23) are integrated into the porous element (20).

19. Arrangement according to one of Claims 14 to 18, **characterized in that** the phase-change materials (27) are encapsulated.

20. Arrangement according to one of Claims 1 to 19, **characterized in that** the main body (2) is made of an elastically compressible material.

21. Arrangement according to one of Claims 1 to 20, **characterized in that** the first sealing face (4) and/or the second sealing face (5) is designed as an elastically compressible layer that is applied to an inelastic substrate (8).

22. Arrangement according to one of Claims 1 to 21, **characterized in that** a depression (6) is formed in the first sealing face (4) and/or the second sealing face (5).

23. Arrangement according to one of Claims 1 to 22, **characterized in that** a localized region of higher elasticity is provided in the first sealing face (4) and/or the second sealing face (5).

24. Arrangement according to one of Claims 1 to 23, **characterized in that** the main body (2) has bores, and **in that** the bores are formed in tabs (7) that project from the main body (2).

25. Arrangement according to one of Claims 1 to 24, **characterized in that** the main body (2) is provided with an adhesive.

26. Battery (18) comprising at least two arrangements (1) according to one of the preceding claims and at least one cell (11), wherein the cell (11) is positioned between two arrangements (1), wherein the cell (11) has a thickened region (14) which extends into the openings (3) of that main body (2), and wherein the cell (11) has a thinner region (15) against which the sealing faces (4, 5) bear so as to create a seal.

27. Battery according to Claim 26, **characterized in that** the sealing faces (4, 5) receive the thinner region (15) between them in the manner of a sandwich, at least in certain regions, and that they bear against one another so as to create a seal.

28. Battery according to Claim 26 or 27, **characterized in that** output plates (10) of the electrodes of the cells (11) are received between the arrangements (1), which plates project beyond the arrangements (1).

29. Battery according to one of Claims 26 to 28, **characterized in that** there is arranged, between the arrangements (1), at least one sensor which detects pressures.

30. Battery according to one of Claims 26 to 29, **characterized in that** the cells (11) are configured as pouch cells with a seal seam (13).

31. Battery according to one of Claims 26 to 30, **characterized in that** a blow-off hood (17) is arranged on the battery (18).

## Revendications

1. Arrangement destiné à être utilisé dans une batterie, comprenant un cadre d'étanchéité (1) avec un corps de base (2), dans lequel le corps de base (2) entoure une ouverture (3), dans lequel le corps de base (2) présente une première face d'étanchéité (4) et une seconde face d'étanchéité opposée (5), dans lequel la première face d'étanchéité (4) et/ou la seconde face d'étanchéité (5) est/sont élastiquement compressible(s) et dans lequel des moyens de refroidissement (22) et/ou des moyens de chauffage (23) sont intégrés dans le corps de base (2), qui traversent le corps de base (2) au moins en partie le long de l'extension longitudinale des faces d'étanchéité (4, 5), **caractérisé en ce qu'**un élément poreux et compressible (20) est associé à l'ouverture (3), dans lequel l'élément (20) est fixé sur le corps de base (2).

2. Arrangement selon la revendication 1, **caractérisé en ce que** les moyens de refroidissement (22) sont constitués par des canaux de refroidissement.

3. Arrangement selon la revendication 1 ou 2, **caractérisé en ce que** les moyens de refroidissement (22) sont constitués par des serpentins de refroidissement.

4. Arrangement selon l'une quelconque des revendications 1 à 3, **caractérisé en ce que** les moyens de chauffage (23) sont constitués par des fils chauffants.

5. Arrangement selon l'une quelconque des revendications 1 à 4, **caractérisé en ce que** l'élément poreux (20) est constitué par un non-tissé ou une étoffe non tissée ou présente des non-tissés et/ou des étoffes non tissées.

6. Arrangement selon l'une quelconque des revendications 1 à 5, **caractérisé en ce que** l'élément poreux (20) est thermiquement conducteur.

7. Arrangement selon l'une quelconque des revendications 1 à 6, **caractérisé en ce que** l'élément poreux (20) est rendu thermiquement conducteur par un revêtement (28).

8. Arrangement selon la revendication 7, **caractérisé en ce que** le revêtement (28) présente du métal, du noir de carbone ou de la céramique.

9. Arrangement selon l'une quelconque des revendications 1 à 8, **caractérisé en ce que** l'élément poreux (20) présente des fibres thermiquement conductrices.

10. Arrangement selon l'une quelconque des revendications 1 à 9, **caractérisé en ce que** l'élément poreux (20) est pourvu d'au moins une feuille métallique.

11. Arrangement selon l'une quelconque des revendications 1 à 10, **caractérisé en ce que** l'élément poreux (20) est collé à l'arrangement (1).

12. Arrangement selon l'une quelconque des revendications 1 à 10, **caractérisé en ce que** l'élément poreux (20) est assemblé à l'arrangement (1) par vulcanisation.

13. Arrangement selon l'une quelconque des revendications 1 à 10, **caractérisé en ce que** l'élément poreux (20) est serré dans l'arrangement (1).

14. Arrangement selon l'une quelconque des revendications 1 à 13, **caractérisé en ce que** l'élément poreux (20) contient des premiers matériaux à changement de phase (27), qui accomplissent à l'intérieur d'une première plage de température une transition de phase d'une phase solide à une phase liquide, dans lequel l'élément poreux (20) contient des deuxièmes matériaux à changement de phase (27), qui accomplissent à l'intérieur d'une seconde plage de température une transition de phase d'une phase solide à une phase liquide.

15. Arrangement selon l'une quelconque des revendications 1 à 14, **caractérisé en ce que** l'élément poreux (20) contient des matériaux à changement de phase (27), qui accomplissent à l'intérieur d'une plage de température de 10°C à 40°C une transition de phase d'une phase solide à une phase liquide.

16. Arrangement selon la revendication 14 ou 15, **caractérisé en ce que** les matériaux à changement de phase (27) se composent exclusivement de substances organiques.

17. Arrangement selon la revendication 14 ou 15, **caractérisé en ce que** les matériaux à changement de phase (27) se composent exclusivement de substances inorganiques.

18. Arrangement selon l'une quelconque des revendications 1 à 17, **caractérisé en ce que** des moyens de chauffage supplémentaires (23) sont intégrés dans l'élément poreux (20).

19. Arrangement selon l'une quelconque des revendications 14 à 18, **caractérisé en ce que** les matériaux à changement de phase (27) sont contenus dans des capsules.

20. Arrangement selon l'une quelconque des revendications 1 à 19, **caractérisé en ce que** le corps de base (2) est fabriqué en un matériau élastiquement compressible.

21. Arrangement selon l'une quelconque des revendications 1 à 20, **caractérisé en ce que** la première face d'étanchéité (4) et/ou la seconde face d'étanchéité (5) est/sont formée(s) par une couche élastiquement compressible, qui est déposée sur un corps de support (8) non élastique.

22. Arrangement selon l'une quelconque des revendications 1 à 21, **caractérisé en ce qu'**un creux (6) est formé dans la première face d'étanchéité (4) et/ou dans la seconde face d'étanchéité (5).

23. Arrangement selon l'une quelconque des revendications 1 à 22, **caractérisé en ce qu'**il est prévu une zone locale à haute élasticité dans la première face d'étanchéité (4) et/ou dans la seconde face d'étanchéité (5).

24. Arrangement selon l'une quelconque des revendications 1 à 23, **caractérisé en ce que** le corps de base (2) présente des trous et **en ce que** les trous sont formés dans des pattes (7), qui sont saillantes sur le corps de base (2).

25. Arrangement selon l'une quelconque des revendications 1 à 24, **caractérisé en ce que** le corps de base (2) est muni d'une substance adhésive.

26. Batterie (18), comprenant au moins deux arrangements (1) selon l'une quelconque des revendications précédentes et au moins une cellule (11), dans laquelle la cellule (11) est positionnée entre deux arrangements (1), dans laquelle la cellule (11) présente une zone épaissie (14), qui s'étend dans les ouvertures (3) de ses corps de base (2) et dans laquelle la cellule (11) présente une zone amincie (15), sur laquelle les faces d'étanchéité (4, 5) s'appliquent de façon étanche.

27. Batterie selon la revendication 26, **caractérisée en ce que** les faces d'étanchéité (4, 5) contiennent entre elles au moins localement à la manière d'un sandwich la zone amincie (15) et s'appliquent l'une sur l'autre de façon étanche.

28. Batterie selon la revendication 26 ou 27, **caractérisée en ce que** des tôles de sortie (10) des électrodes des cellules (11), qui sortent au-delà de l'arrangement (1), sont contenues entre les arrangements (1).

29. Batterie selon l'une quelconque des revendications 26 à 28, **caractérisée en ce qu'**au moins un capteur, qui détecte des pressions, est disposé entre les arrangements (1).

30. Batterie selon l'une quelconque des revendications 26 à 29, **caractérisée en ce que** les cellules (11) sont constituées par des cellules Coffee bag avec une ligne de soudage (13).

31. Batterie selon l'une quelconque des revendications 26 à 30, **caractérisée en ce qu'**une hotte d'évacuation des gaz (17) est disposée sur la batterie (18).
